# EUROPÄISCHE PATENTSCHRIFT

(11) **EP 1 352 160 B1**
(45) Veröffentlichungstag und Bekanntmachung des Hinweises auf die Patenterteilung: **22.03.2006**
(21) Anmeldenummer: 01991692.3
(22) Anmeldetag: 22.12.2001
(51) Int. Cl.: F01N 3/20

(54) **VERFAHREN UND VORRICHTUNG ZUR STEUERUNG EINES ABGASNACHBEHANDLUNGSSYSTEMS**
METHOD AND DEVICE FOR CONTROLLING AN EXHAUST TREATMENT SYSTEM
PROCEDE ET DISPOSITIF DE COMMANDE D'UN SYSTEME DE RETRAITEMENT DES GAZ D'ECHAPPEMENT

(30) Priorität: 08.01.2001 DE 10100420
(43) Veröffentlichungstag der Anmeldung: 15.10.2003
(73) Patentinhaber: ROBERT BOSCH GMBH, 70442 Stuttgart (DE)
(72) Erfinder: RIPPER, Wolfgang, 70327 Stuttgart (DE); MAHR, Bernd, 73207 Plochingen (DE); WICKERT, Stefan, 73095 Albershausen (DE)
(86) Internationale Anmeldenummer: PCT/DE2001/004923
(87) Internationale Veröffentlichungsnummer: WO 2002/053888

(56) Entgegenhaltungen:
- WO-A-00/67015
- DE-A- 10 011 612
- DE-A- 19 536 571
- DE-A- 19 903 439
- DE-C- 19 807 935

## Beschreibung

### Stand der Technik

Die Erfindung geht aus von einem Verfahren und eine Vorrichtung zur Steuerung eines Abgasnachbehandlungssystems.

Ein Verfahren und eine Vorrichtung zur Steuerung eines Abgasnachbehandlungssystems sind in der DE 199 03 439 A1 beschrieben. Das dort vorgesehene Abgasnachbehandlungssystem umfasst wenigstens einen Katalysator. Dem Abgasnachbehandlungssystem wird abhängig vom Zustand der Brennkraftmaschine und/oder des Abgasnachbehandlungssystems eine vorgebbare Menge an Reduktionsmittel zugeführt. Die Reduktionsmittelmenge wird hierbei vorzugsweise ausgehend von Betriebskenngrößen der Brennkraftmaschine, wie beispielsweise der Drehzahl und der eingespritzten Kraftstoffmenge, sowie Größen, die den Zustand des Abgasnachbehandlungssystems charakterisieren, wie beispielsweise der Abgastemperatur vor, in und/oder nach dem Abgasnachbehandlungssystem, bestimmt.

Insbesondere bei der Verwendung von Harnstoff zur Gewinnung des Reduktionsmittels ist die Dosierung des Reduktionsmittels problematisch. Wird eine zu geringe Menge an Reduktionsmittel dem Abgasnachbehandlungssystem zugeführt, so hat dies zur Folge, dass die Stickoxide nicht ausreichend umgesetzt werden und diese in die Umgebung gelangen. Wird eine zu hohe Menge an Reduktionsmittel zugeführt, so kann insbesondere bei einer zudosierten Harnstofflösung der Fall auftreten, dass unerwünschte Stoffe, wie beispielsweise Ammoniak, in die Umgebung gelangen. Dieser Austritt von Ammoniak muss sicher vermieden werden. Daher ist üblicherweise vorgesehen, dass tendenziell eine zu kleine Reduktionsmittelmenge zudosiert wird. Das heißt, die Reduktionsmittelmenge wird so vorgegeben, dass Toleranzen im Bereich der Brennkraftmaschine, des Abgasnachbehandlungssystems oder des Dosiersystems zur Dosierung des Reduktionsmittels nicht zu einem Auftreten von Ammoniak im Abgas führen.

Aus der DE 100 11 612 A1 sind ein Verfahren und eine Vorrichtung zur Steuerung eines Abgasnachbehandlungssystems einer Brennkraftmaschine bekannt geworden, die eine Steuerung der Zuführung eines Reduktionsmittels zum Abgas der Brennkraftmaschine in Abhängigkeit von erfassten Messgrößen vorsieht. Das Abgasnachbehandlungssystem enthält einen NOx-Speicherkatalysator, dem ein SCR-Katalysator nachgeschaltet ist. Als Messgrößen werden die NOx-Konzentration unmittelbar nach dem NOx-Speicherkatalysator sowie die Ammoniak-Konzentration nach dem SCR-Katalysator erfasst.
Aus dem Signal des NOx-Sensors, das die NOx-Konzentration im Abgas widerspiegelt, und einem Signal eines Luftströmungssensors wird die NOx-Menge im Abgas geschätzt. Anhand einer Tabelle wird für die geschätzte NOx-Menge die erforderliche Reduktionsmittelmenge festgelegt. Die nach dem SCR-Katalysator erfasste Ammoniak-Konzentration dient zur Korrektur der ermittelten Reduktionsmittelmenge.

Aus der DE 195 30 571 A1 sind ebenfalls ein Verfahren und eine Vorrichtung zur Dosierung eines Reduktionsmittels in das Abgas einer Brennkraftmaschine bekannt geworden, die eine Adaption der Reduktionsmittelmenge in Abhängigkeit von Kenngrößen der Brennkraftmaschine, des Abgases und des Abgasnachbehandlungssystems vorsehen. Gemäß einer Ausführung ist ein Sensor vorgesehen, der die Schadstoffkonzentration im Abgas erfasst. Die Adaption der Reduktionsmittelmenge erfolgt in Abhängigkeit von dem vom Schadstoff-Sensor abgegebenen Signal. Gemäß einer anderen Ausführung erfolgt die Adaption anhand eines Signals, das ein Sensor erfasst, der auf das Reduktionsmittel empfindlich ist. Während der Adaption ist eine absichtlich herbeigeführte, gezielte Erhöhung bzw. Absenkung des zugeführten Reduktionsmittels vorgesehen, um anhand des Signals des Reduktionsmittel-Sensors die passende Reduktionsmittelmenge festzulegen.

Der Erfindung liegt die Aufgabe zugrunde, ein Verfahren und eine Vorrichtung zur Steuerung eines Abgasnachbehandlungssystems anzugeben, die einen geringen Verbrauch an Reduktionsmittel ermöglichen und ein Auftreten eines Reduktionsmittels stromabwärts nach dem Abgasnachbehandlungssystem möglichst vermeiden.

Die Aufgabe wird durch die in den unabhängigen Ansprüchen angegebenen Merkmale jeweils gelöst.

### Vorteile der Erfindung

Erfindungsgemäß ist eine Adaption des Reduktionsmittels vorgesehen, die in Abhängigkeit von Schwellenüberschreitungen einer ersten und einer zweiten Messgröße erfolgt.

Die erste Messgröße hängt von der Konzentration der für die Umsetzung benötigten Stoffe oder von der Konzentration von entstehenden, nicht erwünschten Zwischenprodukten ab. Die zweite Messgröße hängt von der Konzentration der im Abgasnachbehandlungssystem nicht oder nur teilweise umgesetzten Stoffen ab. Beide Messgrößen treten stromabwärts nach einem im Abgasnachbehandlungssystem enthaltenen Katalysator auf.

Die Reduktionsmittelmenge wird verringert, wenn die erste Messgröße einen oberen Schwellenwert überschreitet. Die Reduktionsmittelmenge wird erhöht, wenn die zweite Messgröße einen oberen Schwellenwert überschreitet.

Die erfindungsgemäße Vorgehensweise führt zu einer genauen Festlegung der Reduktionsmittelmenge die benötigt wird, um einerseits die unerwünschte Abgaskomponente möglichst vollständig zu beseitigen. Die Reduktionsmittelmenge wird andererseits derart festgelegt, dass möglichst kein Reduktionsmittel stromabwärts nach dem Abgasnachbehandlungssystem auftritt.

Vorteilhafte Weiterbildungen und Ausgestaltungen der erfindungsgemäßen Vorgehensweise ergeben sich aus abhängigen Ansprüchen.

Eine Ausgestaltung sieht vor, dass die Schwellenwerte in Abhängigkeit vom Betriebszustand der Brennkraftmaschine und/oder des Abgasnachbehandlungssystems festgelegt werden. Mit dieser Maßnahme wird eine erhöhte Genauigkeit bei der Adaption erreicht.

Eine Ausgestaltung sieht vor, dass die Schwellenwerte bei einem bestimmten Betriebszustand der Brennkraftmaschine und/oder des Abgasnachbehandlungssystems festgelegt werden. Mit dieser Maßnahme wird eine rasche Adaption erreicht.

Eine Ausgestaltung sieht vor, dass die erste Messgröße die Ammoniak-Konzentration und die zweite Messgröße die Stickoxid-Konzentration im Abgas nach dem Abgasnachbehandlungssystem charakterisieren.

Die erfindungsgemäße Vorrichtung weist dieselben Vorteile wie das erfindungsgemäße Verfahren auf.

Von besonderer Bedeutung sind weiterhin die Realisierungen in Form eines Computerprogramms mit Programmcode-Mitteln und in Form eines Computerprogrammprodukts mit Programmcode-Mitteln. Das erfindungsgemäße Computerprogramm weist Programmcode-Mittel auf, um alle Schritte des erfindungsgemäßen Verfahrens durchzuführen, wenn das Programm auf einem Computer, insbesondere einem Steuergerät für eine Brennkraftmaschine eines Kraftfahrzeugs, ausgeführt wird. In diesem Fall wird also die Erfindung durch ein in dem Steuergerät abgespeichertes Programm realisiert, sodass dieses mit dem Programm versehene Steuergerät in gleicher Weise die Erfindung darstellt wie das Verfahren, zu dessen Ausführung das Programm geeignet ist. Das erfindungsgemäße Computerprogrammprodukt weist Programmcode-Mittel auf, die auf einem computerlesbaren Datenträger gespeichert sind, um das erfindungsgemäße Verfahren durchzuführen, wenn das Programmprodukt auf einem Computer, insbesondere einem Steuergerät für eine Brennkraftmaschine eines Kraftfahrzeugs ausgeführt wird. In diesem Fall wird also die Erfindung durch einen Datenträger realisiert, sodass das erfindungsgemäße Verfahren ausgeführt werden kann, wenn das Programmprodukt bzw. der Datenträger in ein Steuergerät für eine Brennkraftmaschine, insbesondere eines Kraftfahrzeugs integriert wird. Als Datenträger bzw. als Computerprogrammprodukt kann insbesondere ein elektrisches Speichermedium zur Anwendung kommen, beispielsweise ein Read-Only-Memory (ROM), ein EPROM oder auch ein elektrischer Permanentspeicher, wie beispielsweise eine CD-ROM oder DVD.

Vorteilhafte Weiterbildungen und Ausgestaltungen der erfindungsgemäßen Vorgehensweise ergeben sich aus der folgenden Beschreibung.

Zeichnung

Die Erfindung wird nachstehend anhand der in der Zeichnung dargestellten Ausführungsformen erläutert. Es zeigen Figur 1 ein Blockdiagramm der erfindungsgemäßen Vorrichtung, Figur 2 eine detaillierte Darstellung der erfindungsgemäßen Vorrichtung als Blockdiagramm und Figur 3 ein Flussdiagramm zur Verdeutlichung der erfindungsgemäßen Vorgehensweise.

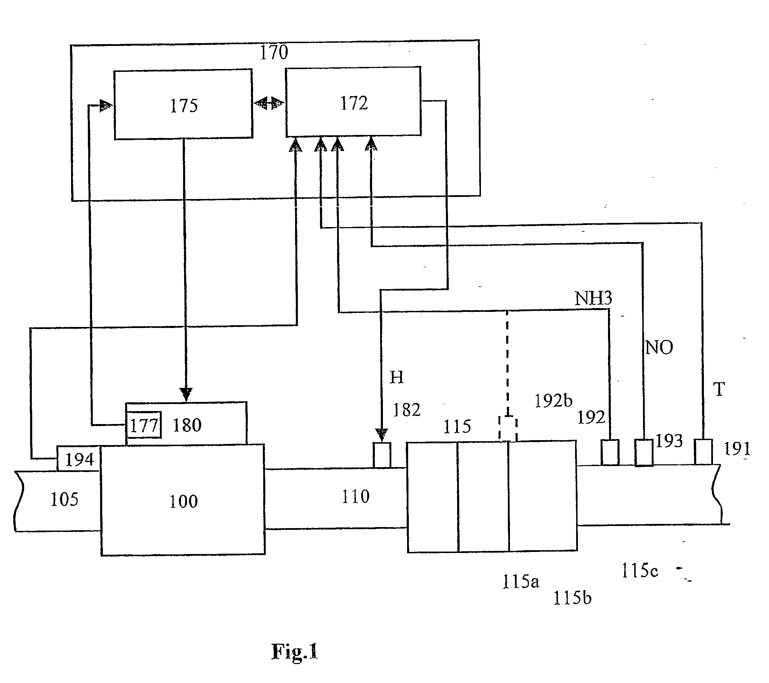

In Figur 1 sind die wesentlichen Elemente eines Abgasnachbehandlungssystems einer Brennkraftmaschine dargestellt. Die Brennkraftmaschine ist mit 100 bezeichnet. Ihr wird über eine Frischluftleitung 105 Frischluft zugeführt. Die Abgase der Brennkraftmaschine 100 gelangen über eine Abgasleitung 110 in die Umgebung. In der Abgasleitung ist ein Abgasnachbehandlungssystem 115 angeordnet. Hierbei handelt es sich vorzugsweise um einen Katalysator. Desweiteren ist es möglich, dass mehrere Katalysatoren für unterschiedliche Schadstoffe oder Kombinationen von wenigstens einem Katalysator und einem Partikelfilter vorgesehen sind.

Bei der bevorzugten Ausführungsform umfasst das Abgasnachbehandlungssystem 115 einen Katalysator bzw. drei Katalysatoren, in denen vorzugsweise drei Reaktionen ablaufen. In einem ersten Hydrolysekatalysator 115a wird die mit dem Stellelement 182 zugeführte Harnstoffwasserlösung in Ammoniak NH3 umgesetzt. In dem anschließenden sogenannten SCR-Katalysator 115b erfolgt die eigentliche Reaktion, bei der die Stickoxide und das Ammoniak zu Stickstoff und Wasser reagieren. In dem anschließenden Oxidationskatalysator 115c wird nicht verbrauchtes Ammoniak oxidiert.

Bei alternativen Ausführungsformen, bei denen andere Reduktionsmittel eingesetzt werden, können auch andere Katalysatoren Verwendung finden und oder einzelne Katalysatoren weggelassen werden. Insbesondere kann der Hydrolysekatalysator eingespart werden, wenn das Reduktionsmittel unmittelbar zugegeben wird.

Desweiteren ist eine Steuereinheit 170 vorgesehen, die wenigstens eine Motorsteuereinheit 175 und eine Abgasnachbehandlungssteuereinheit 172 umfaßt. Die Motorsteuereinheit 175 beaufschlagt ein Kraftstoffzumesssystem 180 mit Ansteuersignalen. Die Abgasnachbehandlungssteuereinheit 172 tauscht mit der Motorsteuereinheit 175 Signale aus. Ferner beaufschlagt die Abgasnachbehandlungssteuereinheit 172 ein Stellelement 182, das in der Abgasleitung vor dem Abgasnachbehandlungssystem oder im Abgasnachbehandlungssystem angeordnet ist, mit Ansteuersignalen.

Desweiteren können verschiedene Sensoren vorgesehen sein, die die Abgasnachbehandlungssteuereinheit und die Motorsteuereinheit mit Signalen versorgen. So kann wenigsten ein erster Sensor 194 vorgesehen sein, der Signale liefert, die den Zustand der Brennkraftmaschine charakterisiert. Ein zweiter Sensor 177 liefert Signale, die den Zustand des Kraftstoffzumesssystems 180 charakterisieren.

Ein Temperatursensor 191 erfasst eine Temperaturgröße T, die die Temperatur des Abgasnachbehandlungssystem charakterisiert. Vorzugsweise ist dieser Temperatursensor 191 nach dem Katalysator 115 angeordnet. Ein Sensor 193 erfasst vorzugsweise eine Stickoxidkonzentration im Abgas nach dem Abgasnachbehandlungssystem. Ein Schadstoffsensor 192 erfasst ein Signal NH3, das die Menge an Ammoniak im Abgas nach dem Abgasnachbehandlungssystem charakterisiert. Besonders vorteilhaft ist es, wenn der Schadstoffsensor zwischen dem SCR-Katalysator 115b und dem Oxidationskatalysator 115c angeordnet ist. Vorzugsweise ist ein Schadstoffsensor 192 oder ein Sensor 193, der die Stickoxidkonzentration im Abgas nach dem Abgasnachbehandlungssystem erfaßt, vorgesehen.

Mit den Ausgangssignalen der Sensoren 191, 192 und 193 werden vorzugsweise die Abgasnachbehandlungssteuereinheit 172 beaufschlagt. Mit den Ausgangssignalen des zweiten Sensors 177 wird vorzugsweise die Motorsteuereinheit 175 beaufschlagt. Es können auch weitere nicht dargestellte Sensoren vorgesehen sein, die ein Signal bezüglich des Fahrerwunsches oder weitere Umgebungs- oder Motorbetriebszustände charakterisieren.

Besonders vorteilhaft ist es, wenn die Motorsteuereinheit und die Abgasnachbehandlungssteuereinheit eine bauliche Einheit bilden. Es kann aber auch vorgesehen sein, dass diese als zwei Steuereinheiten ausgebildet sind, die räumlich voneinander getrennt sind.

Im folgenden wird die erfindungsgemäße Vorgehensweise am Beispiel eines Reduktionskatalysators, der insbesondere bei direkteinspritzenden Brennkraftmaschinen verwendet wird, beschrieben. Die erfindungsgemäße Vorgehensweise ist aber nicht auf diese Anwendung beschränkt, sie kann auch bei anderen Brennkraftmaschinen mit einem Abgasnachbehandlungssystem eingesetzt werden. Insbesondere kann sie eingesetzt werden, bei Abgasnachbehandlungssystemen, bei denen ein Katalysator und ein Partikelfilter kombiniert sind.

Ausgehend von den vorliegenden Sensorsignalen berechnet die Motorsteuerung 175 Ansteuersignale zur Beaufschlagung des Kraftstoffzumesssystems 180. Dieses mißt dann die entsprechende Kraftstoffmenge der Brennkraftmaschine 100 zu. Bei der Verbrennung können im Abgas Stickoxide entstehen. Diese werden von dem Reduktionskatalysator 115b im Abgasnachbehandlungssystem 115 in Stickstoff und Wasser umgesetzt. Hierzu muß dem Abgas vor dem Abgasnachbehandlungssystem ein Reduktionsmittel zugesetzt werden. Bei der dargestellten Ausführungsform wird dieses Reduktionsmittel mittels des Stellgliedes 182 dem Abgas zugesetzt. Als Reduktionsmittel wird vorzugsweise Ammoniak verwendet, das in dem Hydrolysekatalysator 115a ausgehend von einer Harnstofflösung gebildet wird.

Das Stellelement 182 ist vorzugsweise in der Abgasleitung 110 angeordnet. Es kann aber auch im oder am Abgasnachbehandlungssystem insbesondere am Hydrolysekatalysator 115a angebracht sein.

In der im folgenden beschriebenen Ausführungsform wird mit dem Stellelement 182 eine Harnstoffwasserlösung dem Abgasnachbehandlungssystem zugeführt. Im folgenden wird die Harnstoffwasserlösung als Reduktionsmittel bezeichnet.

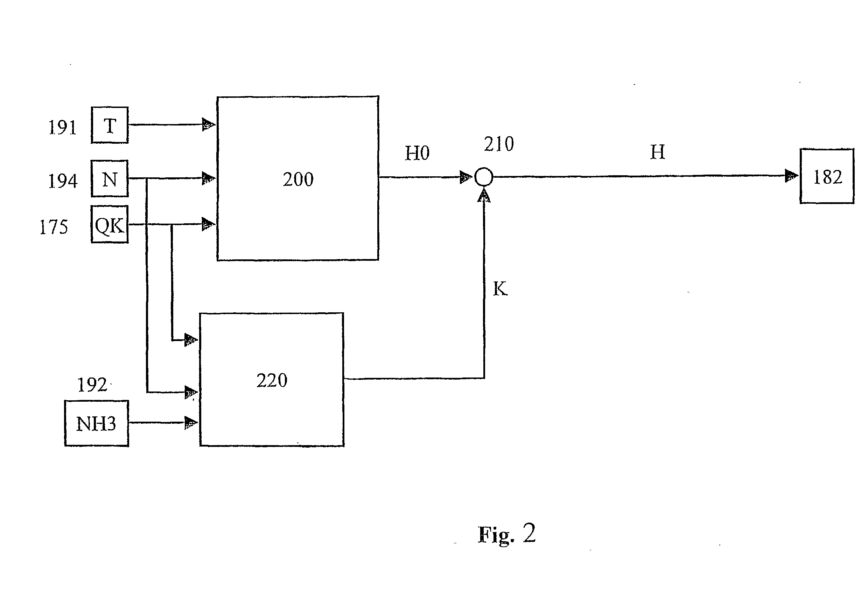

In Figur 2 ist die Abgasnachbehandlungssteuereinheit 172 detaillierter dargestellt. Bereits in Figur 2 beschriebene Elemente sind mit entsprechenden Bezugszeichen bezeichnet. Im wesentlichen umfasst die Abgasnachbehandlungssteuereinheit 172 eine Signalvorgabe 200 sowie eine Korrekturwertermittlung 220. Das Ausgangssignal H0 der Signalwertvorgabe gelangt ebenso wie das Ausgangssignal K der Korrekturwertvorgabe zu einem Verknüpfungspunkt 210. Mit dem Ausgangssignal H des Verknüpfungspunktes 210 wird das Stellelement 182 angesteuert.

Die Korrekturwertermittlung 220 verarbeitet die Ausgangssignale des Sensors 193, der die Stickoxidkonzentration im Abgas nach dem Abgasnachbehandlungssystem erfaßt, und/oder das Ausgangssignal des Schadstoffsensors 192, der ein Signal NH3 bereitstellt, das die Menge an Ammoniak im Abgas nach dem Abgasnachbehandlungssystem charakterisiert. Ferner werden Korrekturwertermittlung 220 Betriebskenngrößen, wie beispielsweise die Drehzahl N, die Kraftstoffmenge QK, die in die Brennkraftmaschine eingespritzt wird, zugeleitet.

Der Signalvorgabe 200 werden verschiedene Betriebskenngrößen, wie beispielsweise die Drehzahl N, die Kraftstoffmenge QK, die in die Brennkraftmaschine eingespritzt wird, und verschiedener Temperaturgrößen T, die insbesondere die Abgastemperatur vor, im und/oder nach dem Abgasnachbehandlungssystem 115 charakterisieren, zugeleitet.

Ausgehend von den Größen berechnet die Signalvorgabe ein Ansteuersignal H0, mit dem das Stellelement 182 anzusteuern ist. Vorzugsweise sind die Werte H0, die das Ansteuersignal für das Stellelement 182 bestimmen, in einem oder mehreren Kennfeldern abhängig von den Eingangsgrößen abgelegt. Dabei kann vorgesehen sein, dass in dem Kennfeld abgelegten Größen ausgehend von verschiedenen Betriebskenngrößen korrigiert werden.

Eine Vorgehensweise zur Vorgabe des Ansteuersignals H0 ist beispielsweise in der DE 199 03 439 beschrieben. Die erfindungsgemäße Vorgehensweise ist aber nicht auf diese Art der Ermittlung der Ansteuersignale für das Stellelement 182 beschränkt. Sie kann auch bei anderen Vorgehensweisen zur Ermittlung des Ansteuersignals oder zur Ermittlung anderer Größen, die dieses Ansteuersignal bestimmen, entsprechend angewandt werden. Wesentlich ist, dass die Signalvorgabe 200 das Ansteuersignal für das Stellelement 182 bzw. eine Größe vorgibt, die die Menge an Reduktionsmittel, die dem Abgasnachbehandlungssystem zuzuführen sind, bestimmt.

Da üblicherweise die Brennkraftmaschinen und/oder die Abgasnachbehandlungssysteme Toleranzen aufweisen, sind die in der Signalvorgabe 200 abgelegten Werte sehr ungenau bzw. ebenfalls mit hohen Toleranzen behaftet. D. h. es müssen Kompromisse bezüglich der Emissionen von Ammoniak und/oder von Stickoxiden eingegangen werden.

Um eine weitere Verringerung der Schadstoffe und/oder ungewünschten Abgasbestandteilen erreichen zu können, wird erfindungsgemäße eine spezifische Adaption des Dosiersystems an die jeweilige Brennkraftmaschine bzw. an das jeweilige Abgasnachbehandlungssystem durchgeführt. Hierzu dient der nach bzw. in dem Abgasnachbehandlungssystem angeordnete Sensor 192, der die Stickoxidemissionen oder die Ammoniakemissionen erfasst.

Die erfassten Emissionen werden mit entsprechenden Sollwerten verglichen, die,erreicht werden sollen. Bei Überschreiten und/oder Unterschreiten von Grenzwerten für die einzelnen Emissionen werden die in der Signalvorgabe abgelegten Werte korrigiert. Dies erfolgt durch die Korrekturwertvorgabe 220, die der dargestellten Ausführungsform einen Korrekturwert K vorgibt, der mit dem Ausgangssignal der Signalvorgabe H0 zur Bildung des Ansteuersignals H verknüpft wird. Vorzugsweise ist vorgesehen, dass eine additive oder eine multiplikative Korrektur erfolgt.

Bevorzugt erfolgt dieser Abgleich bei der Erstinbetriebnahme des Fahrzeugs und anschließend in regelmäßigen Abständen bzw. bei Vorliegen bestimmter Zustände der Brennkraftmaschine und/oder des Abgasnachbehandlungssystems.

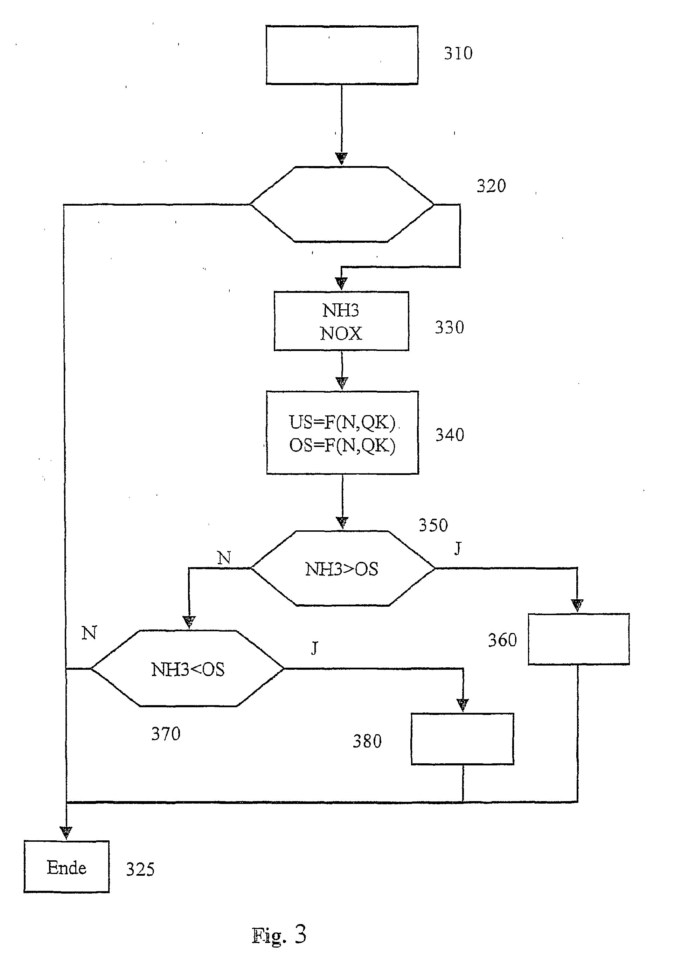

In Figur 3 ist die Funktionsweise der Korrekturwertermittlung 220 detaillierter dargestellt. In einem ersten Schritt 310 wird der Betriebspunkt der Brennkraftmaschine und/oder des Abgasnachbehandlungssystems erfasst. Beispielsweise werden die Drehzahl N und die eingespritzte Kraftstoffmenge QK der Brennkraftmaschine ausgewertet. Ferner kann vorgesehen sein, dass der Zählerstand eines Betriebsstundenzählers und/oder eines Kilometerzählers, der die zurückgelegte Fahrleistung erfasst, ausgelesen wird.

Anschließend in Schritt 320 wird überprüft, ob ein geeigneter Zustand, in dem eine Adaption möglich und sinnvoll ist, vorliegt. Solche Betriebszustände sind insbesondere stationäre Betriebszustände, in denen die erfassten Werte über einen gewissen Zeitraum konstant sind. Dies ist erforderlich, da das Abgasnachbehandlungssystem eine relativ große Totzeit besitzt. Dies bedeutet bei Änderungen des Betriebszustandes wirken sich diese erst nach einer gewissen Verzögerungszeit aus.

Eine Adaption erfolgt nur in solchen Betriebszuständen, in denen sich das System in einem stabilen Zustand befindet, d. h. seit der letzten Änderung der Betriebskenngrößen sollte eine gewisse Zeit verstrichen sein. Desweiteren kann vorgesehen sein, dass die Adaption nur dann erfolgt, wenn sich die Brennkraftmaschine und/oder das Abgasnachbehandlungssystem in bestimmten Betriebspunkten befindet. Diese Betriebspunkte werden durch verschiedene Betriebskenngrößen, wie beispielsweise die Drehzahl N der Brennkraftmaschine, die eingespritzte Kraftstoffmenge QK und/oder bestimmte Temperaturwerte T, insbesondere für die Abgastemperatur, definiert.

Desweiteren kann überprüft werden, ob seit der letzten Adaption eine bestimmte Zeitdauer verstrichen und/oder eine bestimmte Fahrleistung von der Brennkraftmaschine und/oder dem Abgasnachbehandlungssystem erbracht wurde.

Erkennt die Abfrage 320, dass kein geeigneter Betriebszustand vorliegt, so endet das Programm in Schritt 325. Liegt ein geeigneter Betriebszustand vor, so wird in Schritt 330 das Ausgangssignal geeigneter Sensoren ausgewertet. Bevorzugt werden hier Messgrößen erfasst, die die Wirkung des Abgasnachbehandlungssystems charakterisieren. So kann beispielsweise bei der Zuführung von Harnstoff der Gehalt an Ammoniak im Abgas nach dem Abgasnachbehandlungssystem, insbesondere nach dem Reduktionskatalysator ausgewertet werden. Desweiteren ist es möglich, dass die Stickoxidkonzentration, d. h. die Konzentration der unerwünschten Stoffe, die vom Abgasnachbehandlungssystem beseitigt werden sollen, mittels eines Sensors erfasst werden.

Im anschließenden Schritt 340 wird ein unterer Schwellwert US abhängig von dem Betriebszustand der Brennkraftmaschine und/oder des Abgasnachbehandlungssystems vorgegeben. Entsprechend wird ein oberer Schwellwert OS ebenfalls abhängig von diesen Größen vorgegeben. Vorzugsweise wird als Zustandsgröße die Drehzahl, die eingespritzte Kraftstoffmenge QK und gegebenenfalls weitere Größen wie beispielsweise Temperaturwerte T, die die Abgastemperatur charakterisieren, verwendet.

Bei einer vereinfachten Ausgestaltung kann vorgesehen sein, dass feste Werte vorgesehen sind, wobei das Verfahren nur in bestimmten Betriebspunkten, in denen die Signale NH₃ und NOₓ die erwarteten Werte annehmen, durchgeführt werden.

Anschließend in Schritt 350 wird überprüft, ob das Ausgangssignal Ammoniaksensors größer als der obere Schwellwert ist. Ist dies der Fall, so wird in Schritt 360 ein Korrekturwert vorgegeben, der eine Verringerung der zudosierten Reduktionsmittel zur Folge hat. Beispielsweise kann vorgesehen sein, dass ein negativer Korrekturwert hinzuaddiert bzw. der Ausgangswert der Signalvorgabe mit einem Wert kleiner als 1 multipliziert wird. Anschließend endet das Programm ebenfalls in Schritt 325.

Erkennt die Abfrage 350, dass das Ausgangssignal des Ammoniaksensors 192 kleiner als der obere Schwellwert ist, so überprüft die anschließende Abfrage 370, ob das Ausgangssignal des Sensors kleiner als der untere Schwellwert US ist. Ist dies der Fall, wird in Schritt 380 ein solcher Korrekturwert vorgegeben, der eine Erhöhung des zudosierten Reduktionsmittels bewirkt.

Bei der alternativen Ausgestaltung kann vorgesehen sein, dass in Schritt 370 überprüft wird, ob das Ausgangssignal NOₓ eines Stickoxidsensors 193 größer als ein Schwellwert US ist, wobei in diesem Fall ebenfalls eine Korrektur erfolgt, die die Reduktionsmittelmenge erhöht. Entsprechend kann auch bei der Abfrage 350 derart vorgegangen werden, dass das Ausgangssignal eines NOₓ-Sensors dahingehend geprüft wird, ob es kleiner als ein Schwellwert ist und in diesem Fall die Reduktionsmittelmenge verringert wird.

Erfindungsgemäß ist vorgesehen, dass in bestimmten Zuständen der Brennkraftmaschine und/oder des Abgasnachbehandlungssystems, die Messgröße, die die Wirkung des Abgasnachbehandlungssystems charakterisiert, mit erwarteten Werten verglichen und ausgehend von diesem Vergleich die Menge an Reduktionsmittel korrigiert wird.

Dabei kann vorgesehen sein, dass das Ausgangssignal der Signalvorgabe korrigiert wird oder dass die Signalvorgabe an sich verändert wird, d. h. beispielsweise, dass die in Kennfeldern abgelegten Werte entsprechend verändert werden.

Insbesondere ist vorgesehen, dass die Reduktionsmittelmenge verringert wird, wenn die Menge an Ammoniak einen oberen Schwellenwert überschreitet und/oder dass die Menge an Reduktionsmittel erhöht wird, wenn die Stickoxidmenge einen oberen Schwellwert überschreitet.

Erfindungsgemäß werden Systeme verwendet, die jeweils nur einen Ammoniaksensor oder einen Stickoxidsensor aufweisen, alternativ können auch Systeme mit einem Ammoniaksensor und einem Stickoxidsensor vergesehen sein. Besonders vorteilhaft ist die Verwendung eines Stickoxidsensors, der auch für andere Aufgaben im Bereich der Steuerung der Brennkraftmaschine und/oder des Abgasnachbehandlungssystems eingesetzt werden kann.

Die erfindungsgemäße Vorgehensweise ist insbesondere bei der Verwendung eines Stickoxidsensors nicht auf Systeme beschränkt, die Harnstoff oder eine ähnliche Verbindung als Reduktionsmittel verwenden, sondern sie kann auch bei anderen Systemen, die andere Reduktionsmittel verwenden, eingesetzt werden. Insbesondere kann vorgesehen sein, dass Kohlenwasserstoffe als Reduktionsmittel dem Abgas zugesetzt werden. Dies ist insbesondere mit einem Stellglied 182 möglich. Alternativ kann auch vorgesehen sein, dass Kohlenwasserstoffe, die insbesondere Kraftstoff über die üblichen Stellelemente 180 zur Steuerung der eingespritzten Kraftstoffmenge in die Brennkraftmaschine dienen, zugemessen werden. So kann beispielsweise vorgesehen sein, dass eine Nacheinspritzung erfolgt, die entsprechende Kohlenwasserstoffe in das Abgas einbringen.

## Patentansprüche

1. Verfahren zur Steuerung eines wenigstens einen Katalysator (115a, 115b, 115c) enthaltenden Abgasnachbehandlungssystems (115) einer Brennkraftmaschine (100), bei welchem dem Abgasnachbehandlungssystem (115) abhängig vom Zustand der Brennkraftmaschine (100) und/oder des Abgasnachbehandlungssystems (115) eine vorgebbare Menge an Reduktionsmittel zugeführt wird und bei welchem die Menge an zugeführtem Reduktionsmittel in Abhängigkeit von einer ersten Messgröße (NH3), die von der Konzentration der für die Umsetzung benötigten Stoffe und/oder von der Konzentration von entstehenden, nicht erwünschten Zwischenprodukten abhängt, und in Abhängigkeit von einer zweiten Messgröße (NOx), die von der Konzentration der im Abgasnachbehandlungssystem (115) nicht oder nur teilweise umgesetzten Stoffen abhängt, adaptiert wird, **dadurch gekennzeichnet, dass** die Messgrößen (NH3, NOx) hinter dem wenigstens einen Katalysator (115a, 115b, 115c) erfasst werden und dass die Reduktionsmittelmenge verringert wird, wenn die erste Messgröße (NH3) einen oberen Schwellenwert (OS) überschreitet und dass die Reduktionsmittelmenge erhöht wird, wenn die zweite Messgröße (NOx) einen oberen Schwellenwert (OS) überschreitet.

2. Verfahren nach Anspruch 1, **dadurch gekennzeichnet, dass** die Schwellenwerte (OS) in Abhängigkeit vom Betriebszustand der Brennkraftmaschine (100) und/oder des Abgasnachbehandlungssystems (115) vorgegeben werden.

3. Verfahren nach Anspruch 2, **dadurch gekennzeichnet, dass** die Schwellenwerte (OS) in bestimmten Betriebszuständen vorgegeben werden.

4. Verfahren nach einem der vorhergehenden Ansprüche, **dadurch gekennzeichnet, dass** die erste Messgröße (NH3) die Ammoniak-Konzentration im Abgas nach dem Abgasnachbehandlungssystem (115) charakterisiert.

5. Verfahren nach einem der vorhergehenden Ansprüche, **dadurch gekennzeichnet, dass** die zweite Messgröße (NOx) die Stickoxid-Konzentration im Abgas nach dem Abgasnachbehandlungssystem (115) charakterisiert.

6. Vorrichtung zur Steuerung eines wenigstens einen Katalysator (115a, 115b, 115c) enthaltenden Abgasnachbehandlungssystems (115) einer Brennkraftmaschine (100), bei der dem Abgasnachbehandlungssystem (115) abhängig vom Zustand der Brennkraftmaschine (100) und/oder des Abgasnachbehandlungssystems (115) eine Zuführung einer vorgebbaren Menge an Reduktionsmittel durch ein Stellelement (182) vorgesehen, bei der ein erster sensor (192) zur Erfassung einer ersten Messgröße (NH3) vorgesehen ist, die von der Konzentration der für die Umsetzung benötigten Stoffe und/oder von der Konzentration von entstehenden, nicht erwünschten Zwischenprodukten abhängt, und bei der ein zweiter sensor (193) zur Erfassung einer zweiten Messgröße (NOx) vorgesehen ist, die von der Konzentration der im Abgasnachbehandlungssystem (115) nicht oder nur teilweise umgesetzten Stoffen abhängt, und bei der eine Abgasbehandlungssteuereinheit (172) zur Adaption der Menge an zugeführtem Reduktiorismittel in Abhängigkeit von den Messgrößen (NH3, NOx) vorgesehen ist, **dadurch gekennzeichnet, dass** beide sensoren (192, 193) zur Erfassung der Messgrößen (NH3, NOx) hinter dem wenigstens einen Katalysator (115a, 115b, 115c) vorgesehen sind und dass das stellelement (182) so angesteuert wird, dass eine Verringerung der Reduktionsmittelmenge erfolgt, wenn die erste Messgröße (NH3) einen oberen Schwellenwert (OS) überschreitet und dass eine Erhöhung der Reduktionsmittelmenge erfolgt, wenn die zweite Messgröße (NOx) einen oberen Schwellenwert (OS) überschreitet.

## Claims

1. Method for controlling an exhaust gas aftertreatment system (115), which includes at least one catalytic converter (115a, 115b, 115c), of an internal combustion engine (100), in which method a predeterminable quantity of reducing agent is fed to the exhaust gas aftertreatment system (115) as a function of the state of the internal combustion engine (100) and/or of the exhaust gas aftertreatment system (115), and in which method the quantity of reducing agent supplied is adapted as a function of a first measurement variable (NH3), which depends on the concentration of the substances required for the conversion and/or on the concentration of undesirable intermediate products which are formed, and as a function of a second measurement variable (NOx), which depends on the concentration of the substances which are not converted or are only partially converted in the exhaust gas aftertreatment system (115), **characterized in that** the measurement variables (NH3, NOx) are recorded downstream of the at least one catalytic converter (115a, 115b, 115c), and **in that** the quantity of reducing agent is reduced if the first measurement variable (NH3) exceeds an upper threshold value (OS), and **in that** the quantity of reducing agent is increased if the second measurement variable (NOx) exceeds an upper threshold value (OS).

2. Method according to Claim 1, **characterized in that** the threshold values (OS) are predetermined as a function of the operating state of the internal combustion engine (100) and/or of the exhaust gas aftertreatment system (115).

3. Method according to Claim 2, **characterized in that** the threshold values (OS) are predetermined in certain operating states.

4. Method according to one of the preceding claims, **characterized in that** the first measurement variable (NH3) characterizes the concentration of ammonia in the exhaust gas downstream of the exhaust gas aftertreatment system (115).

5. Method according to one of the preceding claims, **characterized in that** the second measurement variable (NOx) characterizes the nitrogen oxide concentration in the exhaust gas downstream of the exhaust gas aftertreatment system (115).

6. Apparatus for controlling an exhaust gas aftertreatment system (115), which includes at least one catalytic converter (115a, 115b, 115c), of an internal combustion engine (100), in which a supply of a predeterminable quantity of reducing agent to the exhaust gas aftertreatment system (115) by an actuating element (182) as a function of the state of the internal combustion engine (100) and/or of the exhaust gas aftertreatment system (115), in which a first sensor (192) is provided for recording a first measurement variable (NH3), which depends on the concentration of the substances required for the conversion and/or on the concentration of undesirable intermediate products which are formed, and in which a second sensor (193) is provided for recording a second measurement variable (NOx), which depends on the concentration of the substances which are not converted or are only partially converted in the exhaust gas aftertreatment system (115), and in which an exhaust gas aftertreatment control unit (172) is provided for adapting the quantity of reducing agent supplied as a function of the measurement variables (NH3, NOx), **characterized in that** both sensors (192, 193) for recording the measurement variables (NH3, NOx) are provided downstream of the at least one catalytic converter (115a, 115b, 115c), and **in that** the actuating element (182) is controlled in such a way that the quantity of reducing agent is reduced if the first measurement variable (NH3) exceeds an upper threshold value (OS) and that the quantity of reducing agent is increased if the second measurement variable (NOx) exceeds an upper threshold value (OS).

## Revendications

1. Procédé de commande d'un système de retraitement des gaz d'échappement (115) comprenant au moins un catalyseur (115a, 115b, 115c) pour un moteur à combustion interne (100), dans lequel une quantité prédéfinie de fluides réducteurs est amenée au système de retraitement de gaz d'échappement (115) en fonction de l'état du moteur à combustion interne (100) et/ou du système de retraitement des gaz d'échappement (115), et selon lequel la quantité de fluides réducteurs amenés est adaptée en fonction d'une première grandeur de mesure (NH3) qui dépend de la concentration des matériaux requis pour la conversion et/ou de la concentration des produits intermédiaires existant non souhaités et en fonction d'une deuxième grandeur de mesure (NOx) qui dépend de la concentration des matériaux non convertis ou partiellement convertis dans le système de retraitement des gaz d'échappement (115),
**caractérisé en ce que**
les grandeurs de mesure (NH3, NOx) sont détectées après l'au moins un catalyseur (115a, 115b, 115c), et on diminue la quantité de fluides réducteurs si la première grandeur de mesure (NH3) dépasse une valeur de seuil (OS) supérieure, et on augmente la quantité de fluides réducteurs si la deuxième grandeur de mesure (NOx) dépasse une valeur de seuil supérieure (OS).

2. Procédé selon la revendication 1,
**caractérisé en ce que**
les valeurs de seuils (OS) sont déterminées en fonction de l'état de fonctionnement du moteur à combustion interne (100) et/ou du système de retraitement des gaz d'échappement (115).

3. Procédé selon la revendication 2,
**caractérisé en ce que**
les valeurs de seuils (OS) sont prédéterminées dans des états de fonctionnement définis.

4. Procédé selon l'une quelconque des revendications précédentes,
**caractérisé en ce que**
la première grandeur de mesure (NH3) caractérise la concentration d'ammoniac dans les gaz d'échappement après le système de retraitement des gaz d'échappement (115).

5. Procédé selon l'une quelconque des revendications précédentes,
**caractérisé en ce que**
la deuxième grandeur de mesure (NOx) caractérise la concentration d'oxyde d'azote dans les gaz d'échappement après le système de retraitement des gaz d'échappement (115).

6. Dispositif de commande d'un système de retraitement des gaz d'échappement (115) comprenant au moins un catalyseur (115a, 115b, 115c) pour un moteur à combustion interne (100), dans lequel une conduite d'amenée fournit une quantité prédéfinie de fluides réducteurs par un élément de réglage (182) sur le système de retraitement des gaz d'échappement (115) en fonction de l'état du moteur à combustion interne (100) et/ou du système de retraitement des gaz d'échappement (115), un premier capteur (192) est prévu pour définir une première grandeur de mesure (NH3) qui dépend de la concentration des matériaux requis pour la conversion et/ou de la concentration des produits intermédiaires existant non souhaités, un deuxième capteur (193) est prévu pour déterminer une deuxième grandeur de mesure (NOx) qui dépend de la concentration des matériaux n'étant pas convertis ou partiellement convertis dans le système de retraitement des gaz d'échappement (115), et une unité de commande de retraitement des gaz d'échappement (172) est prévue pour adapter la quantité de fluides réducteurs amenés en fonction des grandeurs de mesure (NH3, NOx),
**caractérisé en ce que**
les deux capteurs (192, 193) sont prévus pour enregistrer les grandeurs de mesure (NH3, NOx) après l'au moins un catalyseur (115a, 115b, 115c), et l'élément de réglage est commandé pour diminuer la quantité de fluides réducteurs si la première grandeur de mesure (NH3) dépasse une valeur seuil supérieure (OS), et pour augmenter la quantité de fluides réducteurs si la deuxième grandeur de mesure (NOx) dépasse une valeur seuil supérieure (OS).
